# EUROPEAN PATENT SPECIFICATION

(11) **EP 3 613 525 B1**
(45) Date of publication and mention of the grant of the patent: **29.12.2021**
(21) Application number: 19192789.6
(22) Date of filing: 21.08.2019
(51) Int. Cl.: B23B 31/26, B23Q 3/157, B23Q 17/22

(54) **CUTTING APPARATUS**
SCHNEIDVORRICHTUNG
APPAREIL DE DÉCOUPAGE

(30) Priority: 21.08.2018 JP 2018154961
(43) Date of publication of application: 26.02.2020
(73) Proprietor: DGSHAPE Corporation, Hamamatsu-shi, Shizuoka 431-2103 (JP)
(72) Inventor: HAMAMATSU, Kazuhide, Hamamatsu-shi, Shizuoka 431-2103 (JP); SATO, Ryo, Hamamatsu-shi, Shizuoka 431-2103 (JP)
(74) Representative: Grünecker Patent- und Rechtsanwälte PartG mbB

(56) References cited:
- JP-A- H11 188 576
- JP-A- 2013 215 812
- JP-B2- 6 210 591
- US-A1- 2018 029 186

## Description

### BACKGROUND OF THE INVENTION

### 1. Field of the Invention

The present invention relates to cutting apparatuses.

### 2. Description of the Related Art

Cutting apparatuses known in the related art machine workpieces using rotative machining tools. Such a cutting apparatus brings a machining tool into contact with a workpiece at a predetermined angle while three-dimensionally changing the relative positions of the workpiece and the machining tool so as to machine the workpiece into a desired shape.

Such a cutting apparatus includes a spindle unit. The machining tool is detachably gripped by the spindle unit. The workpiece is secured to a retainer. For example, suppose that the cutting apparatus is disposed in a coordinate system including an X axis, a Y axis, and a Z axis perpendicular to each other. In this case, the spindle unit is freely movable in a Y-axis direction and a Z-axis direction in a machining space defined in the cutting apparatus and is able to rotate the machining tool around the Z axis. The retainer is freely movable in an X-axis direction in the machining space and is able to rotate the workpiece around the Y axis.

JP 2017-094437 A, for example, discloses a cutting apparatus including an automatic tool changer (ATC). The ATC is able to automatically change machining tools whose tips have different shapes so as to automatically and continuously carry out various machining processes in a single operation. The cutting apparatus including the ATC further includes a tool magazine. The tool magazine is provided with holding holes in which the machining tools are to be held. The tool magazine is connected to, for example, a retainer.

A cutting apparatus, such as one described above, may have an automatic correction function to make suitable automatic corrections to the relative positions of a workpiece and a machining tool with the aim of continuing high precision machining. Such automatic corrections are made, for example, when the cutting apparatus is used for the first time, when machining precision has changed after machining is carried out for a long period of time, or when a component of a spindle unit is replaced. Making such automatic corrections involves causing the spindle unit to grip a detecting tool, and electrically detecting the relative positions of the detecting tool and a predetermined detecting element (e.g., a sensor) provided on a tool magazine or a retainer. The cutting apparatus is thus able to correct, for example, the relative positions of the spindle unit, the tool magazine, and the retainer, and/or the rotation angles of rotation shafts of the spindle unit and the retainer.

The spindle unit of the cutting apparatus known in the related art includes a main shaft that is retained by a metal bearing and rotates together with the machining tool or the detecting tool. The cutting apparatus is thus able to electrically detect the relative positions of the detecting tool and the predetermined detecting element. To further increase the number of revolutions of the main shaft, a bearing made of a ceramic material may be used instead of the metal bearing. In such a case, the main shaft is insulated from certain component(s) of the spindle unit, making it impossible for the cutting apparatus having the above-described structure to electrically detect the relative positions of the detecting tool and the detecting element. This makes it necessary to additionally provide a complicated device, mechanism, or structure in order to ensure conduction of the main shaft in the spindle unit.

JP 6 210 591 B2 proposes to allow accuracy measurement of a work-piece even when a bearing of a main shaft is non-conductive. In a machining center, a conducting wire (energization line) is secured by forming a conductive part which does not pass through a main shaft, without using the main shaft formed in a Z-axis direction as an energization path, and bringing an energization ring like a plate spring attached to a holder of a sensor probe for contact detection, into contact with the conductive part. Power is supplied to the probe via the conductive part from a contact detection part. In this state, detection of energization, namely, contact of the probe is detected by detecting that a current is transmitted from the probe to a work-piece, etc. and falls to an earth by contact of a tip of the probe with the work-piece, etc. Then, when work-piece dimensions on a jig board are detected, a position in the Z-axis direction is detected by detecting contact between a reference level of the jig board or the work-piece and the probe, and a work-piece thickness and dimensions after processing are measured from a difference of the detected positions.

Accordingly, the present invention provides a cutting apparatus that is able to increase the number of revolutions of a main shaft and ensure conduction of the main shaft with a simple structure.

### SUMMARY OF THE INVENTION

The above problem is solved by a cutting apparatus according to claim 1, including a spindle unit, a carriage, a tool magazine, a retainer, a conductive member, a current feeder, and a controller. The spindle unit includes a spindle and an actuator. The spindle includes a housing, a bearing, a main shaft, a collet chuck, a draw bar, and a first urger. The bearing is housed in the housing. The bearing is made of a ceramic material. The main shaft is rotatably supported by the bearing. The main shaft is provided with a through hole passing through the main shaft in an axial direction of the main shaft. The main shaft includes a first end and a second end. The first end of the main shaft is located on a first side in the axial direction. The second end of the main shaft is located on a second side in the axial direction. The collet chuck includes a first end and a second end. The first end of the collet chuck is located adjacent to the first end of the main shaft. The first end of the collet chuck is configured to grip either one of a machining tool and a detecting tool. The second end of the collet chuck is located adjacent to the second end of the main shaft. The collet chuck is disposed into the through hole and movable in the axial direction. The draw bar includes a first end and a second end. The first end of the draw bar is located adjacent to the first end of the main shaft and connected to the second end of the collet chuck. The second end of the draw bar is located adjacent to the second end of the main shaft. The draw bar is disposed into the through hole and movable in the axial direction. The first urger urges the draw bar in a first direction with a first urging force. The first direction extends from the first end of the main shaft to the second end of the main shaft. The actuator includes a push rod and a mover. The push rod is able to come into contact with the second end of the draw bar and press the draw bar in a second direction extending from the second end of the main shaft to the first end of the main shaft. The push rod is movable in the axial direction. The mover is configured to move the push rod in the axial direction. The carriage is configured to move the spindle unit in a predetermined direction. The tool magazine is able to hold the machining tool and the detecting tool. The retainer is movable together with the tool magazine. The retainer is configured to retain a workpiece to be machined with the machining tool. The conductive member is disposed on the tool magazine or the retainer such that the conductive member is able to come into contact with the detecting tool. The conductive member detects contact of the detecting tool with the conductive member upon being brought into electrical conduction with the push rod. The current feeder is configured to feed a current to the push rod. The controller is configured to control the spindle, the mover, the carriage, and the current feeder. The collet chuck is movable between a gripping position and a release position in accordance with the movement of the draw bar in the axial direction. The gripping position is a position where the first end of the collet chuck is closed so as to grip either one of the machining tool and the detecting tool. The release position is located away from the gripping position in the second direction by a predetermined distance. The release position is a position where the first end of the collet chuck is open so as to release the machining tool or the detecting tool. The mover is configured to move the push rod between a first position, a second position, and a third position. The first position is a position where the push rod is out of contact with the draw bar. The second position is a position where the push rod is in contact with the draw bar and the first end of the collet chuck is closed. The third position is a position where the push rod is in contact with the draw bar and the first end of the collet chuck is open. With the push rod located at the second position and the detecting tool gripped by the first end of the collet chuck, the controller is configured to control the current feeder so as to feed a current to the push rod and to control the carriage so as to move the spindle unit in the predetermined direction, bringing the detecting tool into contact with the conductive member.

The main shaft of the cutting apparatus according to the invention s rotatably supported by the bearing made of a ceramic material. Thus, the number of revolutions of the main shaft is higher than when the main shaft is supported by a bearing made of a metal material. Supporting the main shaft by the bearing made of a ceramic material unfortunately insulates the main shaft from the push rod of the actuator. To cope with this, the cutting apparatus according to the present invention includes the mover to move the push rod in the axial direction of the main shaft. The mover is able to move the push rod to the second position where the push rod is in contact with the draw bar and the first end of the collet chuck is closed. Accordingly, the current fed from the current feeder to the push rod is then fed through the draw bar and the main shaft to the detecting tool gripped by the collet chuck. With the push rod located at the second position and the detecting tool gripped by the first end of the collet chuck, the controller is configured to control the carriage so as to move the spindle unit in the predetermined direction such that the detecting tool is brought into contact with the conductive member. This results in electrical conduction of the conductive member with the push rod. Consequently, the conductive member is able to detect contact of the detecting tool with the conductive member, making it possible to detect the relative positions of the spindle unit (which grips the detecting tool), the tool magazine, and the retainer.

Various embodiments of the present invention provide a cutting apparatus that is able to increase the number of revolutions of a main shaft and ensure conduction of the main shaft with a simple structure.

### BRIEF DESCRIPTION OF THE DRAWINGS

FIG. 1 is a perspective view of a cutting apparatus according to an embodiment of the present invention.
FIG. 2 is a front view of the cutting apparatus according to the embodiment of the present invention.
FIG. 3 is a cross-sectional view of the cutting apparatus according to the embodiment of the present invention.
FIG. 4 is a perspective view of a workpiece attached to an adapter according to the embodiment of the present invention.
FIG. 5 is a perspective view of a tool magazine and a clamp according to the embodiment of the present invention.
FIG. 6 is a front view of the tool magazine and the clamp according to the embodiment of the present invention.
FIG. 7 is a cross-sectional view of a spindle unit according to the embodiment of the present invention, with a push rod located at a first position.
FIG. 8 is a perspective view of a spindle according to the embodiment of the present invention.
FIG. 9 is a perspective view of the spindle according to the embodiment of the present invention.
FIG. 10 is a cross-sectional view of the spindle unit according to the embodiment of the present invention, with the push rod located at a second position.
FIG. 11 is a cross-sectional view of the spindle unit according to the embodiment of the present invention, with the push rod located at a third position.
FIG. 12 is a partial cross-sectional view of the spindle unit, with the push rod located at the first position.
FIG. 13 is a partial cross-sectional view of the spindle unit, with the push rod located at the second position.
FIG. 14 is a partial cross-sectional view of the spindle unit, with the push rod located at the third position.
FIG. 15 is a block diagram of the cutting apparatus according to the embodiment of the present invention.

### DETAILED DESCRIPTION OF THE PREFERRED EMBODIMENTS

Cutting apparatuses according to embodiments of the present invention will be described below with reference to the drawings. The embodiments described below are naturally not intended to limit the present invention which is defined by the appended claims. Components or elements having the same functions are identified by the same reference signs, and description thereof will be simplified or omitted when deemed redundant.

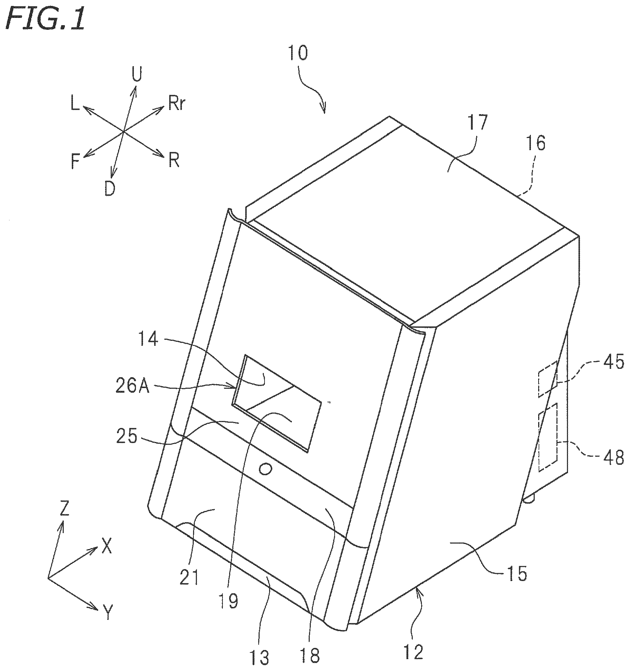

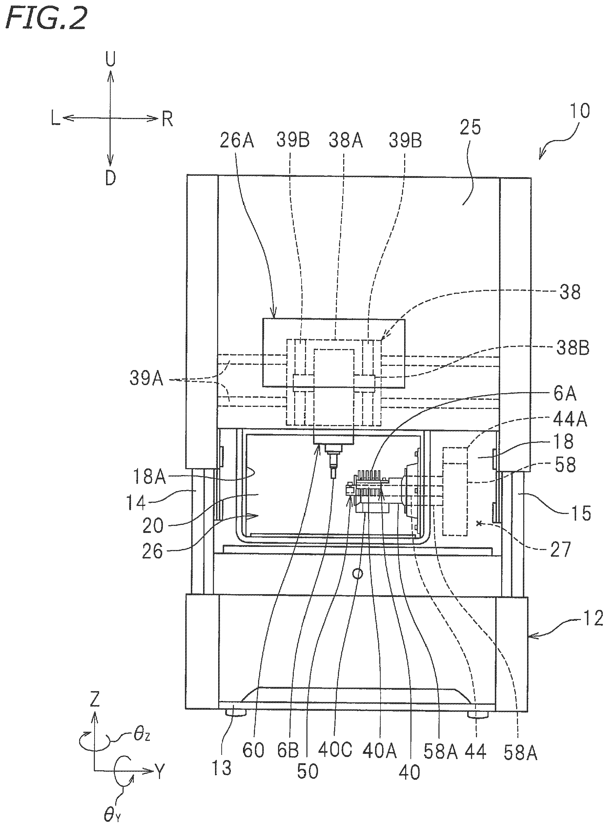

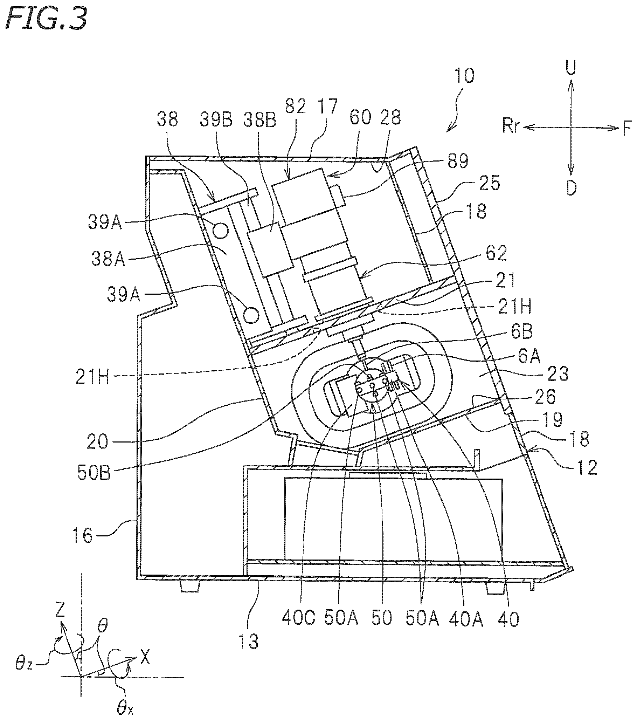

FIG. 1 is a perspective view of a cutting apparatus 10. FIG. 2 is a front view of the cutting apparatus 10. FIG. 3 is a cross-sectional view of the cutting apparatus 10. The following description is based on the assumption that when an operator faces the front of the cutting apparatus 10, a direction from the rear of the cutting apparatus 10 toward the operator is a forward direction and a direction from the operator toward the rear of the cutting apparatus 10 is a rearward direction. The terms "right", "left", "up", and "down" respectively refer to right, left, up, and down with respect to the operator facing the front of the cutting apparatus 10. The reference signs F, Rr, R, L, U, and D in the drawings respectively represent front, rear, right, left, up, and down. In the present embodiment, the cutting apparatus 10 is disposed in a coordinate system including an X axis, a Y axis, and a Z axis perpendicular to each other (which will hereinafter be referred to as an "X, Y, and Z orthogonal coordinate system"). The X axis extends substantially in a front-rear direction. As illustrated in FIG. 3, the X axis is inclined relative to a horizontal direction by an angle θ in the present embodiment. Alternatively, the X axis may extend in the horizontal direction. The Y axis extends in a right-left direction. The Z axis extends substantially in an up-down direction. As illustrated in FIG. 3, the Z axis is inclined relative to a vertical direction by the angle θ in the present embodiment. Alternatively, the Z axis may extend in the vertical direction. The reference sign θₓ represents a rotational direction around the X axis. The reference sign θγ represents a rotational direction around the Y axis. The reference sign θ_{z} represents a rotational direction around the Z axis. These directions are defined merely for the sake of convenience of description and do not limit in any way how the cutting apparatus 10 may be installed. These directions do not limit the present invention in any way.

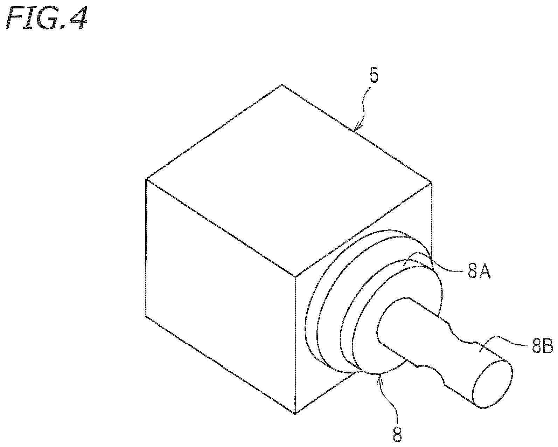

The cutting apparatus 10 machines a workpiece 5 (see FIG. 4). The cutting apparatus 10 machines the workpiece 5 so as to fabricate, for example, a dental prosthetic (such as a crown). The workpiece 5 has, for example, a block shape (such as a prismatic shape). Alternatively, the workpiece 5 may have a disk shape. The workpiece 5 is made of any of various materials, such as zirconia, wax, polymethyl methacrylate (PMMA) resin, hybrid resin, polyether ether ketone (PEEK) resin, and gypsum. When zirconia is selected as a material for the workpiece 5, semi-sintered zirconia, for example, is used. The workpiece 5, however, is not limited to any particular shape or material.

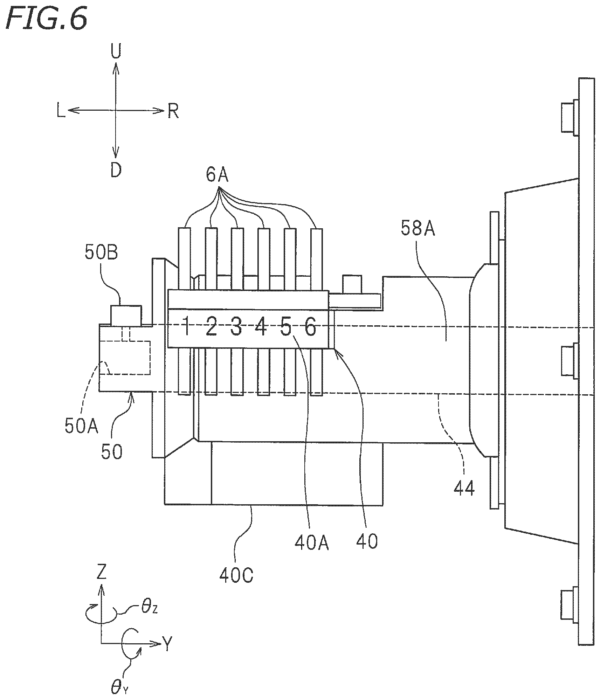

As illustrated in FIG. 4, an adapter 8 (which may also be referred to as a "holder") is attached to the workpiece 5 in the present embodiment. The workpiece 5 having the adapter 8 attached thereto is held in the cutting apparatus 10 and subjected to machining. In the present embodiment, the adapter 8 includes a plate member 8A and a connecting pin 8B. The plate member 8A is connected to the workpiece 5. The connecting pin 8B protrudes from the plate member 8A. The connecting pin 8B is inserted into an insertion hole 50A (see FIG. 6) defined in a clamp (retainer) 50 (which will be described below). The adapter 8 retains the workpiece 5.

As illustrated in FIG. 1, the cutting apparatus 10 has a box shape. The cutting apparatus 10 includes a case body 12, a front cover 25, and a controller 48. The case body 12 includes a lower wall 13, a left wall 14 (see FIG. 2), a right wall 15, a rear wall 16 (see also FIG. 3), an upper wall 17, a front wall 18, a bottom partition 19 (see FIG. 3), a rear partition 20 (see FIGS. 2 and 3), an upper partition 21 (see FIG. 3), and a side partition 23 (see FIG. 3). The left wall 14 extends upward from the left end of the lower wall 13. The right wall 15 extends upward from the right end of the lower wall 13. The rear wall 16 extends upward from the rear end of the lower wall 13. The left end of the rear wall 16 is connected to the rear end of the left wall 14. The right end of the rear wall 16 is connected to the rear end of the right wall 15. The front wall 18 extends upward from the front end of the lower wall 13. The left end of the front wall 18 is connected to the front end of the left wall 14. The right end of the front wall 18 is connected to the front end of the right wall 15. The front wall 18 is provided with an opening 18A (see FIG. 2). The upper wall 17 is connected to the upper ends of the left wall 14, the right wall 15, the rear wall 16, and the front wall 18. As illustrated in FIG. 3, the bottom partition 19 is disposed above the lower wall 13. The upper partition 21 is disposed above the bottom partition 19 and below the upper wall 17. The rear partition 20 is disposed forward of the rear wall 16 and rearward of the front wall 18. The side partition 23 is disposed rightward of the left wall 14 and leftward of the right wall 15. The side partition 23 extends upward from the bottom partition 19. The side partition 23 is connected to the bottom partition 19, the upper partition 21, and the rear partition 20.

As illustrated in FIG. 3, an internal space 26 is defined in the cutting apparatus 10. The internal space 26 is surrounded by the bottom partition 19, the left wall 14 (see FIG. 2), the rear partition 20, the upper partition 21, the side partition 23, and the front wall 18. The internal space 26 is a machining area where the workpiece 5 is to be machined. A first housing space 27 (see FIG. 2) is defined in the cutting apparatus 10. The first housing space 27 is surrounded by the bottom partition 19, the right wall 15 (see FIG. 2), the rear partition 20, the upper partition 21, the side partition 23, and the front wall 18. A conveyor 58 (which will be described below) is housed in the first housing space 27.

The front cover 25 is provided on the front ends of the left wall 14 and the right wall 15 such that the front cover 25 is movable substantially in the up-down direction. Moving the front cover 25 upward (i.e., opening the front cover 25) brings the internal space 26 into communication with an external space. Moving the front cover 25 downward (i.e., closing the front cover 25) separates the internal space 26 from the external space. FIG. 2 illustrates the cutting apparatus 10, with the front cover 25 moved upward such that the internal space 26 in communication with the external space. The front cover 25 is provided with a window 26A. The window 26A is made of, for example, a transparent acrylic plate. The operator is thus able to visually check the internal space 26 through the window 26A. The window 26A is smaller than the opening 18A defined in the front wall 18.

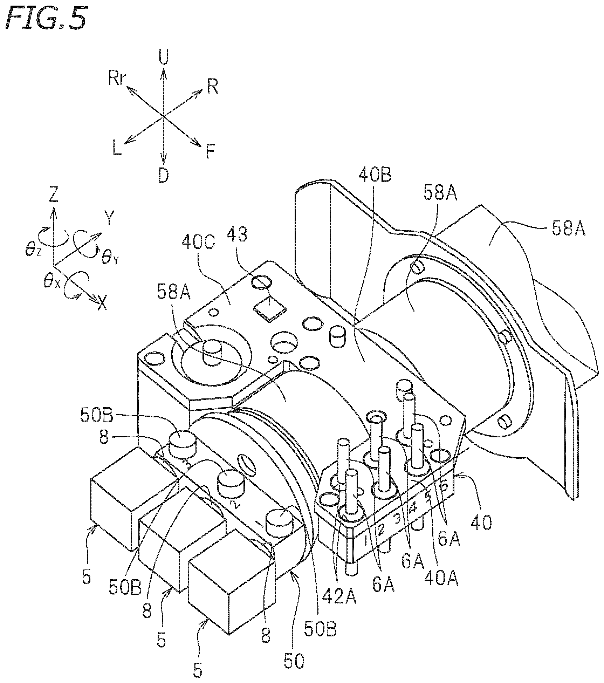

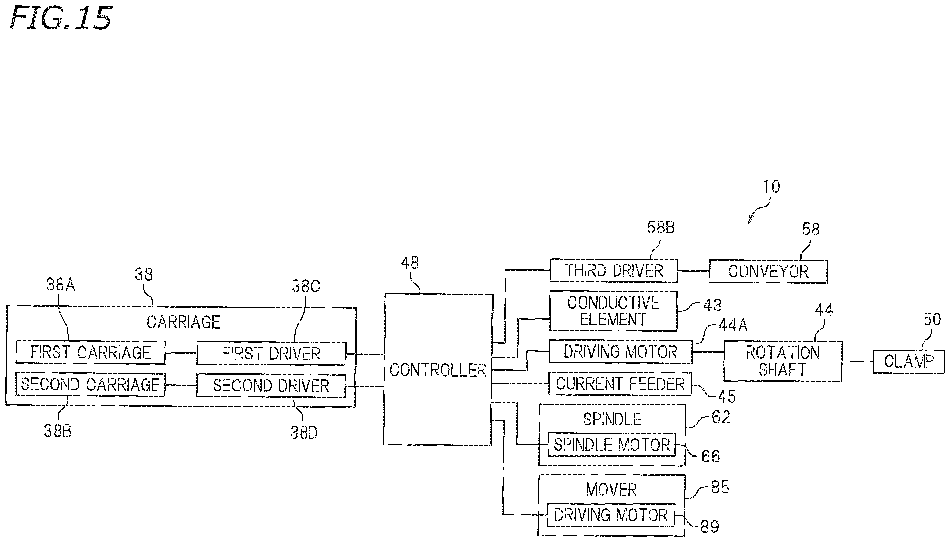

As illustrated in FIG. 2, the cutting apparatus 10 includes a spindle unit 60, a carriage 38, a tool magazine 40 (see also FIG. 5), the clamp 50, and the conveyor 58. A second housing space 28 (see FIG. 3) is defined in the cutting apparatus 10. The second housing space 28 is surrounded by the upper partition 21, the left wall 14, the right wall 15, the rear partition 20, the upper wall 17, and the front wall 18. The carriage 38 and a portion of the spindle unit 60 are disposed in the second housing space 28. The other portion of the spindle unit 60 is disposed in the internal space 26. The spindle unit 60 is inserted through an opening 21H defined in the upper partition 21. The tool magazine 40 and the clamp 50 are disposed in the internal space 26. The carriage 38 is equipped with the spindle unit 60. The carriage 38 is movable in a Z-axis direction and a Y-axis direction. As used herein, the term "Z-axis direction" refers to a direction extending along the Z axis, and the term "Y-axis direction" refers to a direction extending along the Y axis. The carriage 38 moves the spindle unit 60 in the Z-axis direction and the Y-axis direction. The carriage 38 includes a first carriage 38A and a second carriage 38B. The first carriage 38A is supported by a pair of first guide shafts 39A extending in the Y-axis direction. The first carriage 38A is movable in the Y-axis direction along the first guide shafts 39A by a first driver 38C (see FIG. 15). The first guide shafts 39A are provided in the second housing space 28 (see FIG. 3). The left ends of the first guide shafts 39A are connected to the left wall 14. The right ends of the first guide shafts 39A are connected to the right wall 15. The second carriage 38B is supported by a pair of second guide shafts 39B extending in the Z-axis direction. The second carriage 38B is movable in the Z-axis direction along the second guide shafts 39B by a second driver 38D (see FIG. 15). The second guide shafts 39B are provided on the first carriage 38A. Thus, moving the first carriage 38A in the Y-axis direction moves the second carriage 38B in the Y-axis direction accordingly. The first driver 38C and the second driver 38D are controlled by the controller 48.

As illustrated in FIG. 2, the conveyor 58 is disposed in the first housing space 27. The conveyor 58 is disposed rightward of the tool magazine 40. The conveyor 58 includes a shaft 58A extending in the Y-axis direction. A portion of the shaft 58A (e.g., the right portion of the shaft 58A) is disposed in the first housing space 27. Another portion of the shaft 58A (e.g., the left portion of the shaft 58A) is disposed in the internal space 26. The tool magazine 40 is provided on the left end of the shaft 58A. The conveyor 58 is movable in an X-axis direction by a third driver 58B (see FIG. 15). As used herein, the term "X-axis direction" refers to a direction extending along the X axis. The conveyor 58 moves the tool magazine 40 in the X-axis direction. The third driver 58B is controlled by the controller 48.

As illustrated in FIG. 5, the tool magazine 40 is able to hold a plurality of machining tools 6A and a detecting tool 6B. The tool magazine 40 is provided between the clamp 50 and the conveyor 58. Moving the conveyor 58 in the X-axis direction moves the tool magazine 40 in the X-axis direction. The tool magazine 40 includes a first portion 40A, a second portion 40B, and a third portion 40C. The first portion 40A holds the machining tools 6A and the detecting tool 6B. The second portion 40B is located rearward of the first portion 40A. The second portion 40B is connected to the shaft 58A. The third portion 40C is located rearward of the second portion 40B. The first portion 40A of the tool magazine 40 is provided with a plurality of through holes 42A in which the machining tools 6A and the detecting tool 6B are to be held. In the present embodiment, the number of through holes 42A is six. The through holes 42A pass through the tool magazine 40 in the up-down direction. Each of the machining tools 6A and the detecting tool 6B is inserted into an associated one of the through holes 42A such that the upper portion of each of the machining tools 6A and the detecting tool 6B is exposed. Replacement of the machining tool 6A or the detecting tool 6B involves: returning the machining tool 6A or the detecting tool 6B gripped by a collet chuck 67 of a spindle 62 (which will be described below) to the associated insertion hole 42A; moving the spindle unit 60 to a position over the machining tool 6A or the detecting tool 6B to be used next; and causing the collet chuck 67 to grip the upper end of the machining tool 6A or the detecting tool 6B located under the collet chuck 67.

The machining tools 6A each have a rod shape. The cutting apparatus 10 uses the machining tool(s) 6A in cutting the workpiece 5. Each machining tool 6A gradually wears out in the course of cutting the workpiece 5. Each machining tool 6A is made of a conductive material, such as metal. The detecting tool 6B has a rod shape. The cutting apparatus 10 uses the detecting tool 6B in making automatic corrections involving suitably correcting the relative positions of the workpiece 5 and the spindle unit 60, the relative positions of the tool magazine 40 and the spindle unit 60, and/or the relative positions of the clamp 50 and the spindle unit 60. The detecting tool 6B is made of a conductive material, such as metal.

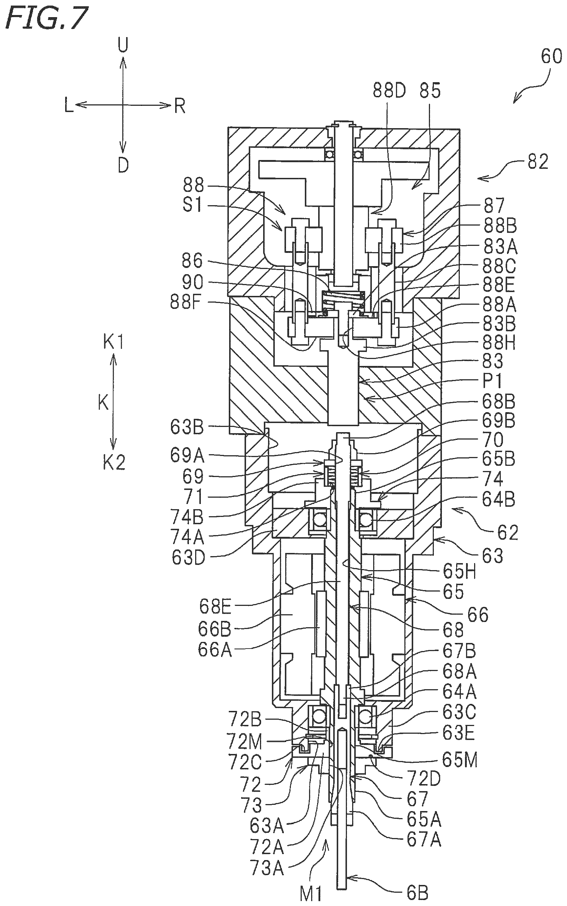

As illustrated in FIG. 5, the cutting apparatus 10 includes a conductive element 43. The conductive element 43 is an example of a conductive member. The conductive element 43 is able to come into contact with the detecting tool 6B. The conductive element 43 is provided on the tool magazine 40. More specifically, the conductive element 43 is provided on the third portion 40C of the tool magazine 40. Alternatively, the conductive element 43 may be provided on the first portion 40A or the second portion 40B of the tool magazine 40. The conductive element 43 may be provided on the clamp 50. The conductive element 43 may be provided on the tool magazine 40 such that the conductive element 43 protrudes from the upper surface of the tool magazine 40. The conductive element 43 is able to detect contact of a first object with the conductive element 43 upon being brought into electrical conduction with a second object. The conductive element 43 is able to detect contact of the detecting tool 6B with the conductive element 43 upon being brought into electrical conduction with a push rod 83 (see FIG. 7). The push rod 83 will be described below. Upon detecting contact of the detecting tool 6B with the conductive element 43, the conductive element 43 transmits, for example, positional information on the spindle unit 60 to the controller 48. Examples of the positional information on the spindle unit 60 include X, Y, and Z coordinate values of a point of contact between the detecting tool 6B and the conductive element 43, and an angle of contact between the detecting tool 6B and the conductive element 43.

As illustrated in FIG. 2, a rotation shaft 44 is provided inside the shaft 58A. The rotation shaft 44 supports the clamp 50 such that the clamp 50 is rotatable. The rotation shaft 44 extends in the right-left direction. The rotation shaft 44 is coupled to the clamp 50 and the conveyor 58. A driving motor 44A (see also FIG. 15) is provided on the conveyor 58. The driving motor 44A is controlled by the controller 48. The rotation shaft 44 is rotatable in the rotational direction θ_{Y} around the Y axis by the driving motor 44A. The rotation of the rotation shaft 44 in the rotational direction θγ around the Y axis causes the clamp 50 to rotate in the rotational direction θγ around the Y axis. The rotation shaft 44 is rotatable independently of the shaft 58A. The rotation of the rotation shaft 44 in the rotational direction θγ around the Y axis thus does not cause the shaft 58A to rotate in the rotational direction θγ around the Y axis.

As illustrated in FIG. 6, the clamp 50 is provided on the left end of the rotation shaft 44. The clamp 50 is disposed leftward of the tool magazine 40. The clamp 50 retains the adapter 8 such that the adapter 8 is detachable from the clamp 50. As illustrated in FIG. 5, the number of adapters 8 retainable by the clamp 50 is three in the present embodiment. The clamp 50 retains the workpiece(s) 5 through the adapter(s) 8. The clamp 50 is an example of a retainer. As illustrated in FIG. 3, the clamp 50 is provided with a plurality of the insertion holes 50A. In the present embodiment, the number of insertion holes 50A is three, and the three insertion holes 50A are aligned in the front-rear direction of the clamp 50. The connecting pins 8B (see FIG. 4) of the adapters 8 are each inserted into an associated one of the insertion holes 50A. The connecting pins 8B inserted into the insertion holes 50A are secured to the clamp 50 with screws 50B. The clamp 50 is movable together with the tool magazine 40. Specifically, the tool magazine 40 and the clamp 50 are movable in the X-axis direction by the conveyor 58. The rotation of the clamp 50 in the rotational direction θγ around the Y axis does not cause the tool magazine 40 to rotate in the rotational direction θγ around the Y axis.

As illustrated in FIG. 7, the spindle unit 60 includes the spindle 62 and an actuator 82. The actuator 82 is detachably disposed on the upper portion of the spindle 62.

As illustrated in FIG. 7, the spindle 62 includes a housing 63, a first bearing 64A, a second bearing 64B, a main shaft 65, a spindle motor 66, the collet chuck 67, a draw bar 68, a first urger 70, a stopper 71, a first cover 72, a second cover 73, and a securer 74.

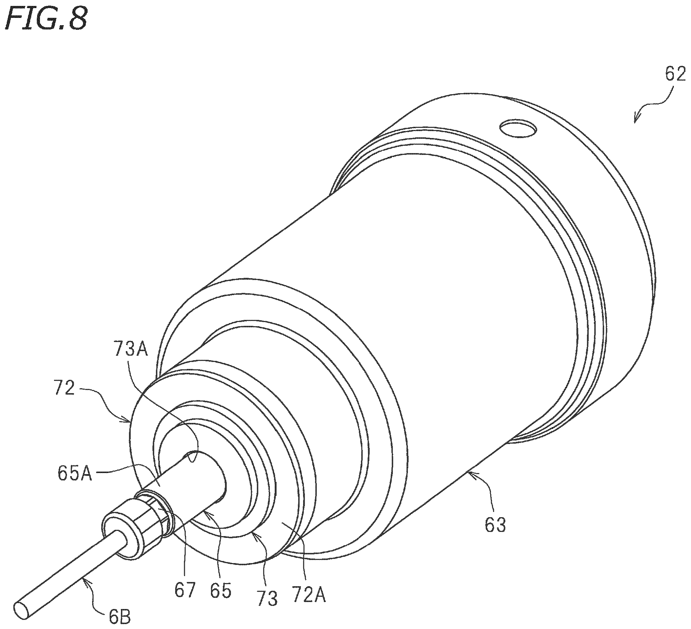

As illustrated in FIG. 8, the housing 63 has a substantially cylindrical shape. As illustrated in FIG. 7, the housing 63 is provided with a first opening 63A and a second opening 63B. The first opening 63A is defined in the lower portion of the housing 63. The second opening 63B is defined in the upper portion of the housing 63. The first opening 63A is smaller than the second opening 63B. The housing 63 includes a first bearing retainer 63C, a second bearing retainer 63D, and a projection 63E. The first bearing retainer 63C is located adjacent to the first opening 63A. The second bearing retainer 63D is located in the second opening 63B. The projection 63E protrudes downward from the first bearing retainer 63C. The first bearing retainer 63C retains a portion of the first bearing 64A. The second bearing retainer 63D retains the second bearing 64B. The projection 63E has a ring shape when viewed from under the housing 63.

As illustrated in FIG. 7, the first and second bearings 64A and 64B are housed in the housing 63. The first bearing 64A is located in the first opening 63A of the housing 63. The first bearing 64A is retained by the first bearing retainer 63C and the first cover 72. The second bearing 64B is located in the second opening 63B of the housing 63. The second bearing 64B is retained by the second bearing retainer 63D. The first and second bearings 64A and 64B support the main shaft 65 such that the main shaft 65 is rotatable. The first and second bearings 64A and 64B are each made of a non-conductive material. In one example, the first and second bearings 64A and 64B are ceramic bearings each made of a ceramic material.

As illustrated in FIG. 7, the main shaft 65 extends in the up-down direction. The main shaft 65 is housed in the housing 63. The main shaft 65 is rotatably supported by the first and second bearings 64A and 64B. The main shaft 65 is provided with a through hole 65H passing through the main shaft 65 in an axial direction K thereof. In the present embodiment, the axial direction K corresponds to the up-down direction. The main shaft 65 includes a first end 65A and a second end 65B. The first end 65A is located on a first side in the axial direction K. In the present embodiment, the first end 65A of the main shaft 65 is the lower end of the main shaft 65. The first end 65A is located adjacent to the first opening 63A. The first end 65A is located outside the housing 63. A portion of the outer peripheral surface of the main shaft 65 adjacent to the first end 65A is provided with an external thread 65M. The second end 65B is located on a second side in the axial direction K. In the present embodiment, the second end 65B of the main shaft 65 is the upper end of the main shaft 65. The second end 65B is located in the second opening 63B. A portion of the through hole 65H adjacent to the first end 65A increases in diameter toward the bottom of the through hole 65H (i.e., as this portion extends away from the second end 65B). The main shaft 65 is made of a conductive material, such as metal.

As illustrated in FIG. 7, the spindle motor 66 is housed in the housing 63. The spindle motor 66 is disposed between the first bearing 64A and the second bearing 64B. The spindle motor 66 includes a rotor 66A and a stator 66B. The rotor 66A is integral with the main shaft 65. The stator 66B is disposed to face the rotor 66A. Passage of a current through the stator 66B rotates the main shaft 65 at high speed. The spindle motor 66 is controlled by the controller 48.

As illustrated in FIG. 7, the collet chuck 67 extends in the up-down direction. The collet chuck 67 is inserted into the through hole 65H of the main shaft 65. The collet chuck 67 is movable in the axial direction K. The collet chuck 67 includes a first end 67A and a second end 67B. The first end 67A of the collet chuck 67 is located adjacent to the first end 65A of the main shaft 65. In the present embodiment, the first end 67A of the collet chuck 67 is the lower end of the collet chuck 67. The first end 67A of the collet chuck 67 grips either one of the machining tool 6A and the detecting tool 6B. A portion of the first end 67A of the collet chuck 67 protrudes out of the through hole 65H of the main shaft 65. The second end 67B of the collet chuck 67 is located adjacent to the second end 65B of the main shaft 65. In the present embodiment, the second end 67B of the collet chuck 67 is the upper end of the collet chuck 67. The second end 67B of the collet chuck 67 is located within the through hole 65H of the main shaft 65. The collet chuck 67 is made of a conductive material, such as metal.

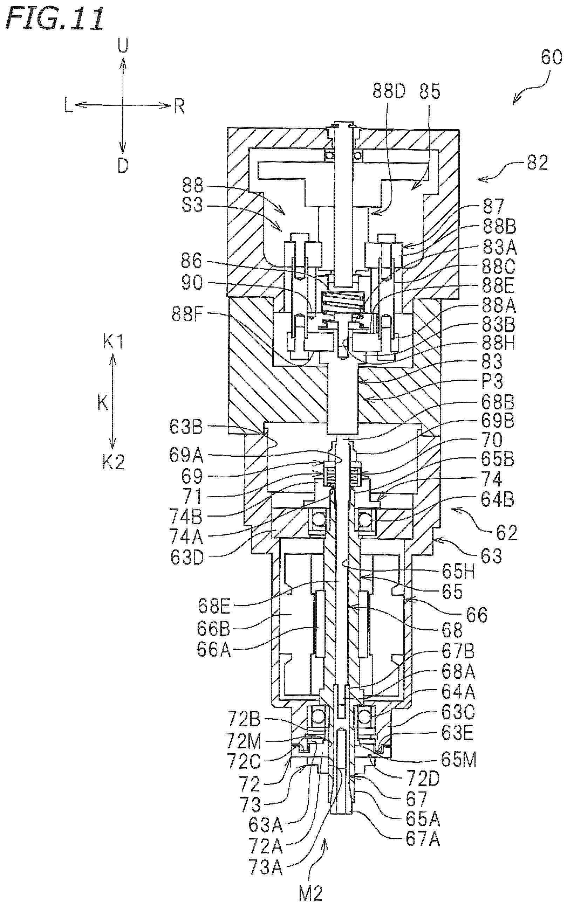

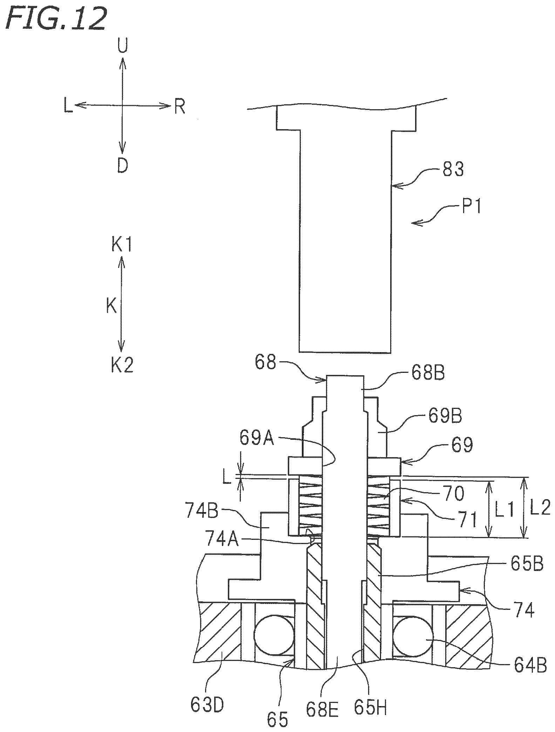

The collet chuck 67 is movable between a gripping position M1 and a release position M2 (see FIG. 11) in accordance with movement of the draw bar 68 in the axial direction K. The release position M2 is located downwardly away from the gripping position M1 by a predetermined distance L (see FIG. 12). The gripping position M1 is a position where the first end 67A of the collet chuck 67 is closed so as to grip either one of the machining tool 6A and the detecting tool 6B. With the collet chuck 67 located at the gripping position M1, the collet chuck 67 is drawn into the through hole 65H of the main shaft 65 to the fullest extent. The release position M2 is a position where the first end 67A of the collet chuck 67 is open so as to release the machining tool 6A or the detecting tool 6B. With the collet chuck 67 located at the release position M2, the collet chuck 67 protrudes out of the through hole 65H of the main shaft 65 to the fullest extent.

As illustrated in FIG. 7, the draw bar 68 extends in the up-down direction. The draw bar 68 is inserted into the through hole 65H of the main shaft 65. The draw bar 68 is movable in the axial direction K. The draw bar 68 is disposed above the collet chuck 67. The draw bar 68 includes a first end 68A and a second end 68B. The first end 68A of the draw bar 68 is located adjacent to the first end 65A of the main shaft 65. In the present embodiment, the first end 68A of the draw bar 68 is the lower end of the draw bar 68. The first end 68A of the draw bar 68 is connected to the second end 67B of the collet chuck 67. The first end 68A of the draw bar 68 is located within the through hole 65H of the main shaft 65. The second end 68B of the draw bar 68 is located adjacent to the second end 65B of the main shaft 65. In the present embodiment, the second end 68B of the draw bar 68 is the upper end of the draw bar 68. The second end 68B of the draw bar 68 protrudes out of the through hole 65H of the main shaft 65. The second end 68B of the draw bar 68 is to be pressed by the push rod 83 (which will be described below) of the actuator 82. The draw bar 68 is made of a conductive material, such as metal.

As illustrated in FIG. 7, the draw bar 68 includes a body 68E and a flange 69. The body 68E extends in the axial direction K. The flange 69 extends in a direction intersecting the axial direction K. In one example, the flange 69 extends in a direction perpendicular or substantially perpendicular to the axial direction K. The flange 69 is provided on the body 68E. The flange 69 has a ring shape, with an insertion hole 69A defined therein. The body 68E is inserted through the insertion hole 69A. The flange 69 is secured to the body 68E. The flange 69 is located in a first direction relative to the second end 65B of the main shaft 65. As used herein, the term "first direction" refers to a direction extending from the first end 65A of the main shaft 65 to the second end 65B of the main shaft 65. In the present embodiment, the first direction is an upward direction indicated by the arrow K1 in FIG. 7 and will hereinafter be referred to as a "first direction K1". The flange 69 is located above the second end 65B of the main shaft 65. Movement of the flange 69 in the first direction K1 is prevented by a securer 69B (which may be a nut).

As illustrated in FIG. 7, the first urger 70 is provided around the draw bar 68. In the present embodiment, the first urger 70 is provided around the body 68E of the draw bar 68. The first urger 70 is supported by the securer 74 attached to the main shaft 65. The first urger 70 is located above the second end 65B of the main shaft 65. In the present embodiment, the first urger 70 includes a plurality of disc springs. The first urger 70 including the disc springs may also be referred to as a "disc spring assembly 70". The draw bar 68 is inserted through the disc spring assembly 70. In the present embodiment, the body 68E of the draw bar 68 is inserted through the disc spring assembly 70. The first urger 70 is in contact with the draw bar 68 so as to urge the draw bar 68 in the first direction K1 with a first urging force. In the present embodiment, the first urger 70 is in contact with the flange 69 of the draw bar 68 so as to urge the draw bar 68 in the first direction K1. In other words, the first urger 70 urges the draw bar 68 in the first direction K1 by urging the flange 69 in the first direction K1.

As illustrated in FIG. 7, the stopper 71 is disposed laterally of the first urger 70. The stopper 71 is disposed around the first urger 70. The stopper 71 is located above the second end 65B of the main shaft 65. The stopper 71 is located below the flange 69. As illustrated in FIG. 12, with no pressing force applied from the push rod 83 (which will be described below) to the first urger 70, a length L1 of the stopper 71 in the axial direction K is shorter than a length L2 of the first urger 70 in the axial direction K. The stopper 71 is able to come into contact with the flange 69 of the draw bar 68. The stopper 71 comes into contact with the flange 69 of the draw bar 68 so as to prevent the draw bar 68 from moving in a second direction by a distance longer than the predetermined distance L. As used herein, the term "second direction" refers to a direction extending from the second end 65B of the main shaft 65 to the first end 65A of the main shaft 65. In the present embodiment, the second direction is a downward direction indicated by the arrow K2 in FIG. 7 and will hereinafter be referred to as a "second direction K2". Specifically, the stopper 71 prevents the draw bar 68 from moving downward by a distance longer than the predetermined distance L (where L = L2 - L1). The stopper 71 allows the draw bar 68 to move in the second direction K2 by a distance equal to or shorter than the predetermined distance L. The predetermined distance L is set such that plastic deformation of the first urger 70 will not occur when the first urger 70 is compressed by a pressing force applied thereto. The stopper 71 is made of, for example, a metal material high in rigidity.

As illustrated in FIG. 7, the securer 74 is secured to the main shaft 65. Specifically, the securer 74 is secured to the second end 65B of the main shaft 65. The securer 74 prevents movement of the second bearing 64B in the axial direction K. The securer 74 includes a step 74A and a wall 74B located around the step 74A. The first urger 70 and the stopper 71 are disposed on the step 74A. The wall 74B is disposed around the stopper 71 and in contact with the stopper 71. The securer 74 is, for example, a nut.

As illustrated in FIG. 7, the first cover 72 covers the first opening 63A of the housing 63. The first cover 72 overlaps with the first opening 63A when viewed in the axial direction K. The first cover 72 retains the first bearing 64A. The first cover 72 is provided with an internal thread 72M that comes into engagement with the external thread 65M of the main shaft 65. More specifically, the first cover 72 includes a body 72A and a protrusion 72B. The body 72A covers the first opening 63A. The body 72A overlaps with the first opening 63A when viewed in the axial direction K. The protrusion 72B protrudes from the body 72A in the first direction K1. The protrusion 72B retains the first bearing 64A. The internal thread 72M is provided on the inner peripheral surfaces of the body 72A and the protrusion 72B in the axial direction K. The first cover 72 rotates together with the main shaft 65.

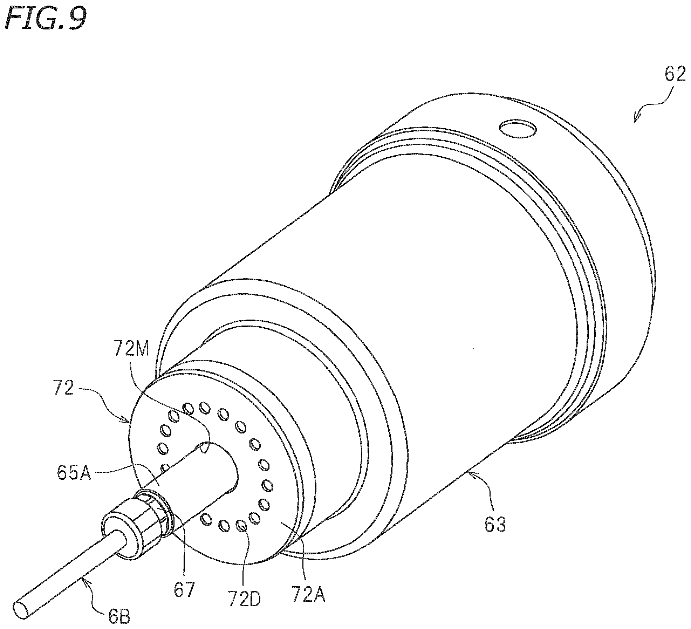

As illustrated in FIG. 7, the first cover 72 is provided with a groove 72C. The groove 72C is defined in a surface of the body 72A of the first cover 72 facing in the first direction K1. In other words, the groove 72C is defined in the upper surface of the body 72A of the first cover 72. The projection 63E of the housing 63 is disposed in the groove 72C. The projection 63E does not come into contact with the first cover 72. As illustrated in FIG. 9, the first cover 72 is provided with a plurality of attachment holes 72D. Weights (not illustrated) are attached to the first cover 72 through the attachment holes 72D so as to adjust rotation of the main shaft 65. The attachment holes 72D are provided at regular intervals along an imaginary circle drawn around the axis of the first cover 72. The attachment holes 72D are defined in a surface of the body 72A of the first cover 72 facing in the second direction K2. In other words, the attachment holes 72D are defined in the lower surface of the body 72A of the first cover 72.

As illustrated in FIG. 7, the second cover 73 covers the attachment holes 72D (see FIG. 9) defined in the first cover 72. The second cover 73 is provided with an insertion hole 73A through which the main shaft 65 is to be inserted. The second cover 73 is in contact with the entire circumference of a portion of the main shaft 65 located within the insertion hole 73A. The second cover 73 rotates together with the main shaft 65. The second cover 73 is made of an elastically deformable resin material.

As illustrated in FIG. 7, the actuator 82 includes the push rod 83, a mover 85, and a sensor 90.

As illustrated in FIG. 7, the push rod 83 extends in the up-down direction. The push rod 83 is able to come into contact with the second end 68B of the draw bar 68. The push rod 83 is able to press the draw bar 68 in the second direction K2. The push rod 83 is movable in the axial direction K. The push rod 83 includes a first flange 83A and a second flange 83B. The first flange 83A is able to come into abutment with a first surface 88E of a first movable body 88A (which will be described below). The second flange 83B is able to come into abutment with a second surface 88F of the first movable body 88A. The push rod 83 is made of a conductive material, such as metal.

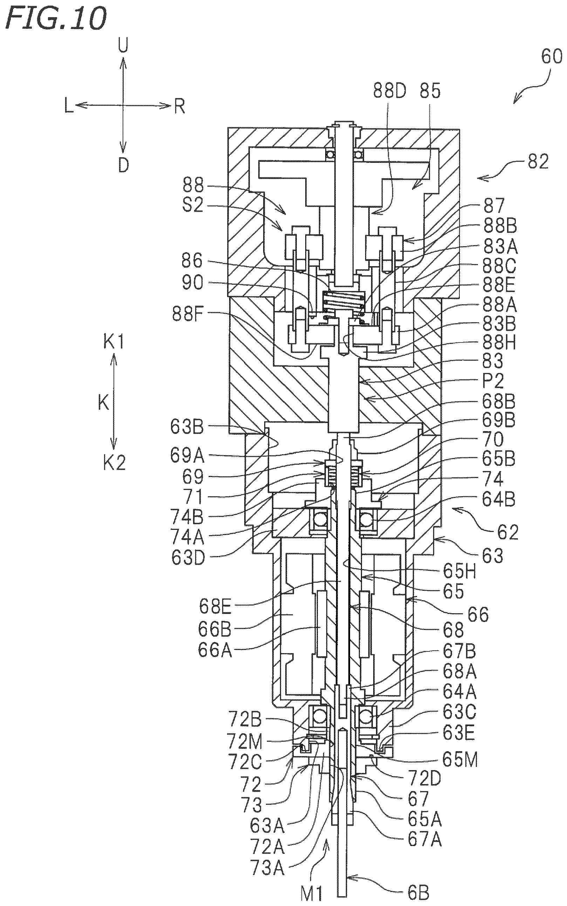

The mover 85 moves the push rod 83 in the axial direction K. The mover 85 is configured to move the push rod 83 between a first position P1 (see FIG. 7), a second position P2 (see FIG. 10), and a third position P3 (see FIG. 11). As illustrated in FIG. 7, the first position P1 is a position where the push rod 83 is out of contact with the draw bar 68. With the push rod 83 located at the first position P1, the collet chuck 67 is located at the gripping position M1. As illustrated in FIG. 10, the second position P2 is a position where the push rod 83 is in contact with the draw bar 68 and the first end 67A of the collet chuck 67 is closed. The second position P2 is located below the first position P1. With the push rod 83 located at the second position P2, the collet chuck 67 is located at the gripping position M1. As illustrated in FIG. 11, the third position P3 is a position where the push rod 83 is in contact with the draw bar 68 and the first end 67A of the collet chuck 67 is open. The third position P3 is located below the second position P2. With the push rod 83 located at the third position P3, the collet chuck 67 is located at the release position M2.

As illustrated in FIG. 7, the mover 85 includes a second urger 86 and a presser 87. The second urger 86 is connected to the first flange 83A of the push rod 83. The second urger 86 is connected to a portion of the presser 87. The second urger 86 urges the push rod 83 in the second direction K2 with a second urging force. The second urging force of the second urger 86 is smaller than the first urging force of the first urger 70. The second urger 86 is, for example, a compression spring.

The presser 87 is able to press the push rod 83 in the second direction K2 with a predetermined pressing force. The pressing force of the presser 87 is greater than the first urging force of the first urger 70. As illustrated in FIG. 7, the presser 87 includes a movable member 88 and a driving motor 89 (see FIG. 3). The movable member 88 includes the first movable body 88A, a second movable body 88B, a connector 88C, and a supporting shaft 88D. The movable member 88 is movable in the axial direction K. The first movable body 88A is an example of a movable body.

The first movable body 88A has a disk shape. The first movable body 88A is provided with a guide hole 88H passing through the first movable body 88A in the axial direction K. A portion of the push rod 83 is inserted through the guide hole 88H. The first movable body 88A includes the first surface 88E and the second surface 88F. The first surface 88E is located adjacent to the second urger 86. The second surface 88F is located adjacent to the draw bar 68. The second movable body 88B has a disk shape. The second movable body 88B is disposed above the first movable body 88A. The second movable body 88B is slidably provided on the supporting shaft 88D.

The connector 88C couples the first movable body 88A to the second movable body 88B. This enables the first movable body 88A and the second movable body 88B to move together in the axial direction K. The supporting shaft 88D extends in the axial direction K. A driving force from the driving motor 89 is transmitted to the supporting shaft 88D. The supporting shaft 88D is rotatable by the driving force from the driving motor 89. The rotation of the supporting shaft 88D moves the movable member 88 in the first direction K1 and the second direction K2.

The driving motor 89 moves the push rod 83 in the first direction K1 and the second direction K2. Specifically, driving the driving motor 89 rotates the supporting shaft 88D such that the push rod 83 moves in the first direction K1 and the second direction K2 accordingly.

As illustrated in FIG. 7, with the push rod 83 located at the first position P1, the push rod 83 is urged in the second direction K2 by only the second urging force of the second urger 86. In this state, the presser 87 applies no pressing force to the push rod 83. With the presser 87 located at a first reference position S1, the movement of the push rod 83 in the second direction K2 is prevented by the first movable body 88A of the movable member 88. The push rod 83 is thus located at the first position P1 where the push rod 83 is out of contact with the draw bar 68. In the state illustrated in FIG. 7, the first flange 83A of the push rod 83 is in abutment with the first surface 88E of the first movable body 88A, and the second flange 83B of the push rod 83 is out of abutment with the second surface 88F of the first movable body 88A.

As illustrated in FIG. 12, the push rod 83 is out of contact with the draw bar 68, with the push rod 83 located at the first position P1. In this state, the draw bar 68 is urged in the first direction K1 by the first urger 70. The collet chuck 67 is thus located at the gripping position M1. The stopper 71 and the flange 69 of the draw bar 68 are located away from each other in the axial direction K by the distance L.

As illustrated in FIG. 10, the push rod 83 is urged in the second direction K2 by only the second urging force of the second urger 86, with the push rod 83 located at the second position P2 and the detecting tool 6B gripped by the first end 67A of the collet chuck 67. In this state, the presser 87 applies no pressing force to the push rod 83. Moving the presser 87 from the first reference position S1 to a second reference position S2 causes the second urging force of the second urger 86 to move the push rod 83 in the second direction K2. The push rod 83 is thus located at the second position P2 where the push rod 83 is in contact with the draw bar 68. The presser 87 located at the second reference position S2 allows the push rod 83 to move in the second direction K2 with the second urging force of the second urger 86. In the state illustrated in FIG. 10, the first flange 83A of the push rod 83 is out of abutment with the first surface 88E of the first movable body 88A, and the second flange 83B of the push rod 83 is out of abutment with the second surface 88F of the first movable body 88A. The second reference position S2 is located below the first reference position S1. The distance by which the push rod 83 moves between first position P1 (see FIG. 7) and the second position P2 (see FIG. 10) is equal to the distance between the first reference position S1 and the second reference position S2.

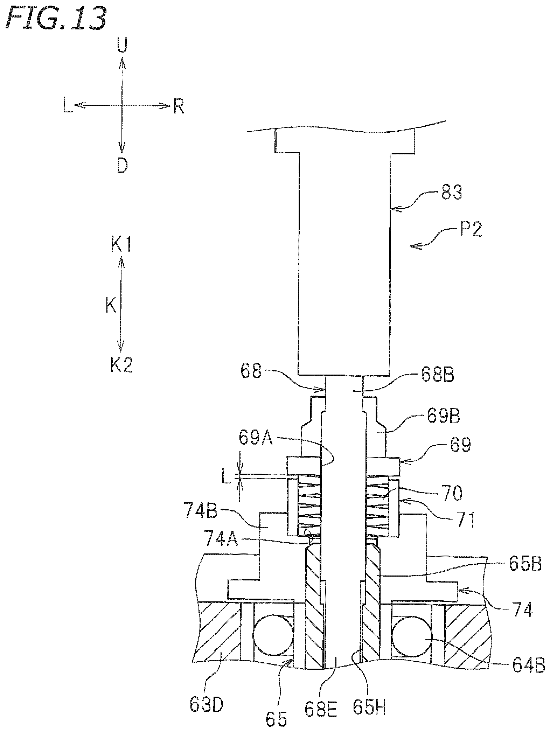

As illustrated in FIG. 13, with the push rod 83 located at the second position P2, the push rod 83 is in contact with the draw bar 68 but does not press the draw bar 68 in the second direction K2. In this state, the draw bar 68 is urged in the first direction K1 by the first urger 70. The collet chuck 67 is thus located at the gripping position M1. The stopper 71 and the flange 69 of the draw bar 68 are located away from each other in the axial direction K by the distance L.

As illustrated in FIG. 11, with the push rod 83 located at the third position P3, the push rod 83 is urged in the second direction K2 by only the pressing force of the presser 87. The pressing force of the presser 87 is applied to the second urger 86 through the push rod 83. Moving the presser 87 from the second reference position S2 to a third reference position S3 causes the presser 87 to press the push rod 83 in the second direction K2, with the second flange 83B of the push rod 83 in abutment with the second surface 88F of the first movable body 88A. This moves collet chuck 67 from the gripping position M1 to the release position M2. In the state illustrated in FIG. 11, the first flange 83A of the push rod 83 is out of abutment with the first surface 88E of the first movable body 88A, and the second flange 83B of the push rod 83 is in abutment with the second surface 88F of the first movable body 88A. The third reference position S3 is located below the second reference position S2.

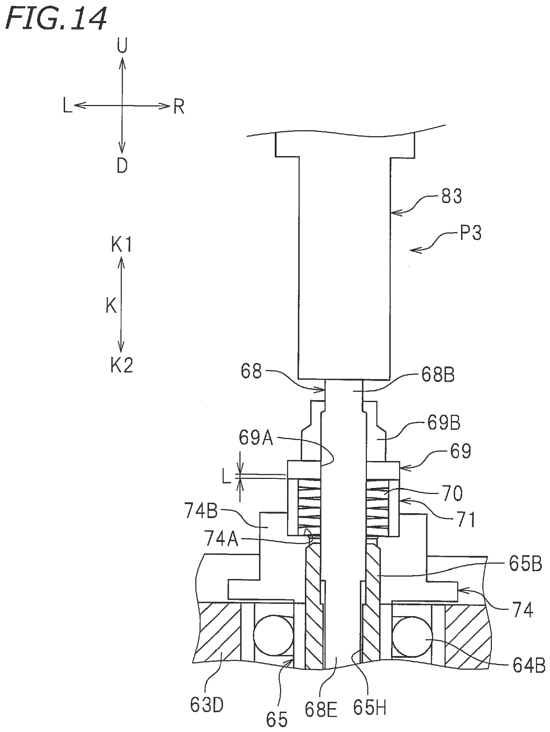

As illustrated in FIG. 14, moving the push rod 83 from the second position P2 (see FIG. 13) to the third position P3 causes the push rod 83 to press the draw bar 68 in the second direction K2, with the push rod 83 kept in contact with the draw bar 68. Because the stopper 71 is provided around the first urger 70, the draw bar 68 moves in the second direction K2 by the distance L. The collet chuck 67 is thus located at the release position M2. If the pressing force of the push rod 83 becomes excessively large, the amount by which the first urger 70 is compressed would not exceed the distance L because the stopper 71 is provided around the first urger 70.

The sensor 90 detects non-contact of the push rod 83 with the draw bar 68. As illustrated in FIG. 7, the sensor 90 is configured to detect non-contact of the push rod 83 with the draw bar 68 upon being pressed by the first movable body 88A. The sensor 90 is disposed between the first movable body 88A and the second movable body 88B. The sensor 90 is disposed laterally of the second urger 86. With the push rod 83 out of contact of the draw bar 68, the sensor 90 is located at a position where the sensor 90 is pressed by the first movable body 88A.

As illustrated in FIG. 15, the cutting apparatus 10 includes a current feeder 45. The current feeder 45 is disposed in the case body 12. The current feeder 45 feeds a current to the push rod 83 (see FIG. 7). When the controller 48 makes automatic correction(s), the current feeder 45 feeds a current to the push rod 83. The current feeder 45 is controlled by the controller 48. The current feeder 45 includes, for example, an electronic circuit. The current feeder 45 may directly feed a current to the push rod 83 or may indirectly feed a current to the push rod 83. When the current feeder 45 indirectly feeds a current to the push rod 83, the current feeder 45 may feed a current to the push rod 83 through, for example, the mover 85 of the actuator 82.

As illustrated in FIG. 1, the controller 48 is disposed in the case body 12. The controller 48 controls the first driver 38C, the second driver 38D, the third driver 58B, the driving motor 44A, the current feeder 45, the spindle motor 66, and the driving motor 89.

The controller 48 is able to, when non-contact of the push rod 83 with the draw bar 68 is detected by the sensor 90, drive the driving motor 89 for a predetermined period of time so as to move the push rod 83 in the second direction K2. The predetermined period of time may be set such that the draw bar 68 is moved in the second direction K2 by the pressing force of the push rod 83 and the collet chuck 67 is located at the release position M2.

The controller 48 makes automatic correction(s) involving suitably correcting the relative positions of the workpiece 5 and the spindle unit 60, the relative positions of the tool magazine 40 and the spindle unit 60, and/or the relative positions of the clamp 50 and the spindle unit 60. With the push rod 83 located at the second position P2 (see FIG. 10) and the detecting tool 6B gripped by the first end 67A of the collet chuck 67, the controller 48 controls the current feeder 45 so as to feed a current to the push rod 83 and controls the carriage 38 so as to move the spindle unit 60 in a predetermined direction such that the detecting tool 6B is brought into contact with the conductive element 43. The controller 48 is thus able to determine the relative positions of the tool magazine 40 and the spindle unit 60 and adjust the positions and angles of the components of the cutting apparatus 10 (such as the spindle unit 60 and the tool magazine 40) such that these components assume predetermined relative positions.

As described above, the main shaft 65 of the cutting apparatus 10 according to the present embodiment is rotatably supported by the first and second bearings 64A and 64B each made of a ceramic material. Thus, the number of revolutions of the main shaft 65 is higher than when the main shaft 65 is supported by a bearing made of a metal material. Supporting the main shaft 65 by the first and second bearings 64A and 64B each made of a ceramic material unfortunately insulates the main shaft 65 from the push rod 83 of the actuator 82. To cope with this, the cutting apparatus 10 according to the present embodiment includes the mover 85 to move the push rod 83 in the axial direction K of the main shaft 65. The mover 85 is able to move the push rod 83 to the second position P2 where the push rod 83 is in contact with the draw bar 68 and the first end 67A of the collet chuck 67 is closed. Accordingly, the current fed from the current feeder 45 to the push rod 83 is then fed through the draw bar 68 and the main shaft 65 to the detecting tool 6B gripped by the collet chuck 67. With the push rod 83 located at the second position P2 and the detecting tool 6B gripped by the first end 67A of the collet chuck 67, the controller 48 controls the carriage 38 so as to move the spindle unit 60 in the predetermined direction such that the detecting tool 6B is brought into contact with the conductive element 43. This results in electrical conduction of the conductive element 43 with the push rod 83. Consequently, the conductive element 43 is able to detect contact of the detecting tool 6B with the conductive element 43, making it possible to detect the relative positions of the spindle unit 60 (which grips the detecting tool 6B), the tool magazine 40, and the clamp 50.

The push rod 83 of the cutting apparatus 10 according to the present embodiment is urged in the second direction K2 by only the second urging force of the second urger 86, with the push rod 83 located at the second position P2 and the detecting tool 6B gripped by the first end 67A of the collet chuck 67. The second urging force of the second urger 86 is smaller than the first urging force of the first urger 70. Thus, the movement of the push rod 83 in the second direction K2 caused by the second urging force of the second urger 86 does not move the draw bar 68 in the second direction K2. Because the collet chuck 67 is located at the gripping position M1 and kept closed, the push rod 83 is in contact with the draw bar 68 so as to ensure conduction of the main shaft 65, and the detecting tool 6B is reliably retained by the collet chuck 67.

The cutting apparatus 10 according to the present embodiment is configured such that, with the push rod 83 located at the first position P1, the first flange 83A is in abutment with the first surface 88E, and the second flange 83B is out of abutment with the second surface 88F. The cutting apparatus 10 according to the present embodiment is configured such that, with the push rod 83 located at the second position P2, the first flange 83A is out of abutment with the first surface 88E, and the second flange 83B is out of abutment with the second surface 88F. The cutting apparatus 10 according to the present embodiment is configured such that, with the push rod 83 located at the third position P3, the first flange 83A is out of abutment with the first surface 88E, and the second flange 83B is in abutment with the second surface 88F. At the first position P1 and the second position P2, the push rod 83 is pressed in the second direction K2 by only the second urging force of the second urger 86 connected to the first flange 83A. The collet chuck 67 is thus located at the gripping position M1 such that the first end 67A of the collet chuck 67 is kept closed. At the third position P3, the push rod 83 is pressed in the second direction K2 by only the first movable body 88A of the presser 87. The collet chuck 67 is thus located at the release position M2 such that the first end 67A of the collet chuck 67 is open.

The cutting apparatus 10 according to the present embodiment is configured such that, with the presser 87 located at the first reference position S1, the presser 87 prevents movement of the push rod 83 in the second direction K2 caused by the second urging force of the second urger 86, placing the push rod 83 at the first position P1. The push rod 83 is thus out of contact with the draw bar 68 and does not interfere with rotation of the main shaft 65. Upon being moved from the first reference position S1 to the second reference position S2 away from the first reference position S1 in the second direction K2 by a predetermined distance, the presser 87 allows movement of the push rod 83 in the second direction K2 caused by the second urging force of the second urger 86, placing the push rod 83 at the second position P2. Consequently, the push rod 83 comes into contact with the draw bar 68 so as to ensure conduction of the main shaft 65.

The cutting apparatus 10 according to the present embodiment is configured such that, upon being moved from the second reference position S2 to the third reference position S3 away from the second reference position S2 in the second direction K2 by a predetermined distance, the presser 87 presses the push rod 83 in the second direction K2, with the second flange 83B in abutment with the second surface 88F, resulting in movement of the collet chuck 67 from the gripping position M1 to the release position M2. The movement of the push rod 83 in the second direction K2 is thus caused by the pressing force of the presser 87 instead of the second urging force of the second urger 86. This enables the collet chuck 67 to move from the gripping position M1 to the release position M2.

The actuator 82 of the cutting apparatus 10 according to the present embodiment includes the sensor 90 to detect non-contact of the push rod 83 with the draw bar 68 upon being pressed by the first movable body 88A. The cutting apparatus 10 is thus able to prevent rotation of the main shaft 65, with the push rod 83 in contact with the draw bar 68.

Although the preferred embodiment of the present invention has been described thus far, the foregoing embodiment is only illustrative, and the present invention may be embodied in various other forms as defined by the appended claims.

In the foregoing embodiment, the first urger 70 and the stopper 71 are located above the second end 65B of the main shaft 65. Alternatively, the first urger 70 and the stopper 71 may be located at any other suitable locations. The first urger 70 and the stopper 71 may be located within the through hole 65H of the main shaft 65.

In the foregoing embodiment, the flange 69 of the draw bar 68 is a component separate from the body 68E. Alternatively, the flange 69 may be integral with the body 68E.

In the foregoing embodiment, the flange 69 of the draw bar 68 is disposed at a location somewhere along the body 68E. Alternatively, the flange 69 may be disposed on an end of the body 68E (e.g., the second end 68B of the draw bar 68). In such a case, the push rod 83 presses the flange 69 disposed on the second end 68B of the draw bar 68.

In the foregoing embodiment, the first urger 70 includes a plurality of disc springs. Alternatively, the first urger 70 may include a compression spring instead of the disc springs.

## Claims

1. A cutting apparatus (10) comprising:
a spindle unit (60);
a carriage (38);
a tool magazine (40);
a retainer (50);
a conductive member (43);
a current feeder (45); and
a controller (48), wherein
the spindle unit (60) includes a spindle (62) and an actuator (82),
the spindle (62) includes
a housing (63),
a bearing (64A, 64B) housed in the housing (63), the bearing (64A, 64B) being made of a ceramic material,
a main shaft (65) rotatably supported by the bearing (64A, 64B), the main shaft (65) being provided with a through hole (65H) passing through the main shaft (65) in an axial direction (K) of the main shaft (65), the main shaft (65) including a first end (65A) and a second end (65B), the first end (65A) of the main shaft (65) being located on a first side in the axial direction (K), the second end (65B) of the main shaft (65) being located on a second side in the axial direction (K),
a collet chuck (67) including a first end (67A) and a second end (67B), the first end (67A) of the collet chuck (67) being that located on the same side as the first end (65A) of the main shaft (65), the first end (67A) of the collet chuck (67) being configured to grip either one of a machining tool (6A) and a detecting tool (6B), the second end (67B) of the collet chuck (67) being that located on the same side as the second end (65B) of the main shaft (65), the collet chuck (67) being disposed in the through hole (65H) and movable in the axial direction (K),
a draw bar (68) including a first end (68A) and a second end (68B), the first end (68A) of the draw bar (68) being that located on the same side as the first end (65A) of the main shaft (65) and connected to the second end (67B) of the collet chuck (67), the second end (68B) of the draw bar (68) being that located on the same side as the second end (65B) of the main shaft (65), the draw bar (68) being disposed in the through hole (65H) and movable in the axial direction (K), and
a first urger (70) urging the draw bar (68) in a first direction (K1) with a first urging force, the first direction (K1) extending from the first end (65A) of the main shaft (65) to the second end (65B) of the main shaft (65),
the actuator (82) includes
a push rod (83) that is able to come into contact with the second end (68B) of the draw bar (68) and press the draw bar (68) in a second direction (K2) extending from the second end (65B) of the main shaft (65) to the first end (65A) of the main shaft (65), the push rod (83) being movable in the axial direction (K), and
a mover (85) to move the push rod (83) in the axial direction (K),
the carriage (38) is configured to move the spindle unit (60) in a predetermined direction,
the tool magazine (40) is able to hold the machining tool (6A) and the detecting tool (6B),
the retainer (50) is movable together with the tool magazine (40), the retainer (50) being configured to retain a workpiece (5) to be machined with the machining tool (6A),
the conductive member (43) is disposed on the tool magazine (40) or the retainer (50) such that the conductive member (43) is able to come into contact with the detecting tool (6B), the conductive member (43) being configured to detect contact of the detecting tool (6B) with the conductive member (43) upon being brought into electrical conduction with the push rod (83),
the current feeder (45) is configured to feed a current to the push rod (83),
the controller (48) is configured to control the spindle (62), the mover (85), the carriage (38), and the current feeder (45),
the collet chuck (67) is movable between a gripping position (M1) and a release position (M2) in accordance with the movement of the draw bar (68) in the axial direction (K), the gripping position (M1) being a position where the first end (67A) of the collet chuck (67) is closed so as to grip either one of the machining tool (6A) and the detecting tool (6B), the release position (M2) being located away from the gripping position (M1) in the second direction (K2) by a predetermined distance, the release position (M2) being a position where the first end (67A) of the collet chuck (67) is open so as to release the machining tool (6A) or the detecting tool (6B),
the mover (85) is configured to move the push rod (83) between a first position (P1), a second position (P2), and a third position (P3), the first position (P1) being a position where the push rod (83) is out of contact with the draw bar (68), the second position (P2) being a position where the push rod (83) is in contact with the draw bar (68) and the first end (67A) of the collet chuck (67) is closed, the third position (P3) being a position where the push rod (83) is in contact with the draw bar (68) and the first end (67A) of the collet chuck (67) is open, and
with the push rod (83) located at the second position (P2) and the detecting tool (6B) gripped by the first end (67A) of the collet chuck (67), the controller (48) is configured to control the current feeder (45) so as to feed a current to the push rod (83) and to control the carriage (38) so as to move the spindle unit (60) in the predetermined direction, bringing the detecting tool (6B) into contact with the conductive member (43).

2. The cutting apparatus (10) according to claim 1, wherein
the mover (85) includes
a second urger (86) urging the push rod (83) in the second direction (K2) with a second urging force smaller than the first urging force, and
a presser (87) that is able to press the push rod (83) in the second direction (K2) with a pressing force greater than the first urging force, and
with the push rod (83) located at the second position (P2) and the detecting tool (6B) gripped by the first end (67A) of the collet chuck (67), the push rod (83) is urged in the second direction (K2) by only the second urging force of the second urger (86).

3. The cutting apparatus (10) according to claim 2, wherein
the presser (87) includes a movable body (88A) and a driving motor (89),
the movable body (88A) is provided with a guide hole (88H) passing through the movable body (88A) in the axial direction (K),
a portion of the push rod (83) is disposed through the guide hole (88H),
the movable body (88A) includes
a first surface (88E) located adjacent to the second urger (86) in the axial direction (K), and
a second surface (88F) located adjacent to the draw bar (68) in the axial direction (K),
the movable body (88A) is movable in the axial direction (K),
the driving motor (89) is configured to move the movable body (88A) in the first direction (K1) and the second direction (K2),
the push rod (83) includes
a first flange (83A) that is able to come into abutment with the first surface (88E) of the movable body (88A), and
a second flange (83B) that is able to come into abutment with the second surface (88F) of the movable body (88A),
the second urger (86) is connected to the first flange (83A),
with the push rod (83) located at the first position (P1), the first flange (83A) is in abutment with the first surface (88E), and the second flange (83B) is out of abutment with the second surface (88F),
with the push rod (83) located at the second position (P2), the first flange (83A) is out of abutment with the first surface (88E), and the second flange (83B) is out of abutment with the second surface (88F), and
with the push rod (83) located at the third position (P3), the first flange (83A) is out of abutment with the first surface (88E), and the second flange (83B) is in abutment with the second surface (88F).

4. The cutting apparatus (10) according to claim 3, wherein
with the presser (87) located at a first reference position (S1), the presser (87) prevents movement of the push rod (83) in the second direction (K2) caused by the second urging force of the second urger (86), placing the push rod (83) at the first position (P1), and
upon being moved from the first reference position (S1) to a second reference position (S2) away from the first reference position (S1) in the second direction (K2) by a predetermined distance, the presser (87) allows movement of the push rod (83) in the second direction (K2) caused by the second urging force of the second urger (86), placing the push rod (83) at the second position (P2).

5. The cutting apparatus (10) according to claim 4, wherein
upon being moved from the second reference position (S2) to a third reference position (S3) away from the second reference position (S2) in the second direction (K2) by a predetermined distance, the presser (87) presses the push rod (83) in the second direction (K2), with the second flange (83B) in abutment with the second surface (88F), resulting in movement of the collet chuck (67) from the gripping position (M1) to the release position (M2).

6. The cutting apparatus (10) according to any one of claims 3 to 5, wherein
the actuator (82) includes a sensor (90) to detect non-contact of the push rod (83) with the draw bar (68) upon being pressed by the movable body (88A).

## Patentansprüche

1. Eine Schneidevorrichtung (10) umfassend:
eine Spindeleinheit (60);
einen Schlitten (38);
ein Werkzeugmagazin (40);
einen Halter (50);
ein leitfähiges Element (43);
eine Stromzuführung (45); und
eine Steuerung (48), wobei
die Spindeleinheit (60) eine Spindel (62) und einen Aktuator (82) umfasst,
die Spindel (62) enthält
ein Gehäuse (63),
ein Lager (64A, 64B), das in dem Gehäuse (63) untergebracht ist, wobei das Lager (64A, 64B) aus einem Keramikmaterial besteht,
eine Hauptwelle (65), die drehbar von dem Lager (64A, 64B) gelagert wird, wobei die Hauptwelle (65) mit einem Durchgangsloch (65H) versehen ist, das durch die Hauptwelle (65) in einer axialen Richtung (K) der Hauptwelle (65) verläuft, wobei die Hauptwelle (65) ein erstes Ende (65A) und ein zweites Ende (65B) umfasst, wobei das erste Ende (65A) der Hauptwelle (65) auf einer ersten Seite in der axialen Richtung (K) angeordnet ist, wobei sich das zweite Ende (65B) der Hauptwelle (65) auf einer zweiten Seite in axialer Richtung (K) befindet,
ein Spannfutter (67) mit einem ersten Ende (67A) und einem zweiten Ende (67B), wobei das erste Ende (67A) des Spannfutters (67) dasjenige ist, das sich auf der gleichen Seite befindet wie das erste Ende (65A) des Hauptwelle (65), wobei das erste Ende (67A) des Spannfutters (67) geeignet ist, entweder ein Bearbeitungswerkzeug (6A) oder ein Erfassungswerkzeug (6B) zu greifen, das zweite Ende (67B) des Spannfutters (67) auf der gleichen Seite wie das zweite Ende (65B) der Hauptwelle (65) angeordnet ist, wobei das Spannfutter (67) in der Durchgangsbohrung (65H) angeordnet und in axialer Richtung (K) bewegbar ist,
eine Zugstange (68) mit einem ersten Ende (68A) und einem zweiten Ende (68B), wobei das erste Ende (68A) der Zugstange (68) dasjenige ist, das sich auf derselben Seite befindet wie das erste Ende (65A) der Hauptwelle (65) und mit dem zweiten Ende (67B) des Spannfutters (67) verbunden ist, wobei das zweite Ende (68B) der Zugstange (68) dasjenige ist, das sich auf der gleichen Seite wie das zweite Ende (65B) der Hauptwelle (65) befindet, wobei die Zugstange (68) im Durchgangsloch (65H) angeordnet und in axialer Richtung (K) beweglich ist, und
einen ersten Dränger (70), der die Zugstange (68) mit einer ersten Druckkraft in eine erste Richtung (K1) drängt, wobei sich die erste Richtung (K1) vom ersten Ende (65A) der Hauptwelle (65) zum zweiten Ende (65B) der Hauptwelle (65) erstreckt,
der Aktuator (82) beinhaltet
eine Schubstange (83), die mit dem zweiten Ende (68B) der Zugstange (68) in Kontakt kommen und die Zugstange (68) in eine zweite Richtung (K2) drücken kann, die sich vom zweiten Ende (65B) der Hauptwelle (65) aus zum ersten Ende (65A) der Hauptwelle (65) erstreckt, wobei die Schubstange (83) in axialer Richtung (K) beweglich ist, und
ein Bewegungselement (85) zum Bewegen der Schubstange (83) in axialer Richtung (K),
der Schlitten (38) dazu konfiguriert ist, die Spindeleinheit (60) in eine vorbestimmte Richtung zu bewegen,
das Werkzeugmagazin (40) das Bearbeitungswerkzeug (6A) und das Erfassungswerkzeug (6B) aufnehmen kann,
der Halter (50) zusammen mit dem Werkzeugmagazin (40) bewegbar ist, wobei der Halter (50) konfiguriert ist, um ein mit dem Bearbeitungswerkzeug (6A) zu bearbeitendes Werkstück (5) zu halten,
das leitende Element (43) auf dem Werkzeugmagazin (40) oder dem Halter (50) angeordnet ist, so dass das leitende Element (43) mit dem Erfassungswerkzeug (6B) in Kontakt kommen kann, wobei das leitende Element (43) konfiguriert ist, um einen Kontakt des Erfassungswerkzeugs (6B) mit dem leitenden Element (43) zu erfassen, wenn es mit der Schubstange (83) in eine elektrische Leitung gebracht wird,
die Stromzuführung (45) dazu konfiguriert ist, der Schubstange (83) einen Strom zuzuführen,
die Steuerung (48) dazu konfiguriert ist, die Spindel (62), das Bewegungselement (85), den Schlitten (38) und die Stromzuführung (45) zu steuern.
das Spannfutter (67) entsprechend der Bewegung der Zugstange (68) in axialer Richtung (K) zwischen einer Greifstellung (M1) und einer Freigabestellung (M2) bewegbar ist, wobei die Greifstellung (M1) eine Position ist, in der das erste Ende (67A) des Spannfutters (67) geschlossen ist, um entweder das Bearbeitungswerkzeug (6A) oder das Erfassungswerkzeug (6B) zu greifen, wobei die Freigabestellung (M2) in der zweiten Richtung (K2) um einen vorbestimmten Abstand von der Greifstellung (M1) entfernt positioniert ist, wobei die Freigabeposition (M2) eine Position ist, in der das erste Ende (67A) des Spannfutters (67) offen ist, um das Bearbeitungswerkzeug (6A) oder das Erfassungswerkzeug (6B) freizugeben,
das Bewegungselement (85) so konfiguriert ist, dass es die Schubstange (83) zwischen einer ersten Position (P1), einer zweiten Position (P2) und einer dritten Position (P3) bewegt, wobei die erste Position (P1) eine Position ist, in der die Schubstange (83) keinen Kontakt mit der Zugstange (68) hat, wobei die zweite Position (P2) eine Position ist, in der die Schubstange (83) in Kontakt mit der Zugstange (68) ist und das erste Ende (67A) des Spannfutters (67) geschlossen ist, wobei die dritte Position (P3) eine Position ist, in der die Schubstange (83) die Zugstange (68) berührt und das erste Ende (67A) des Spannfutters (67) offen ist, und
wobei sich die Schubstange (83) an der zweiten Position (P2) befindet und das Erfassungswerkzeug (6B) von dem ersten Ende (67A) des Spannfutters (67) gegriffen wird, die Steuerung (48) konfiguriert ist, um die Stromzuführung zu steuern (45), um der Schubstange (83) einen Strom zuzuführen und um den Schlitten (38) zu steuern, um die Spindeleinheit (60) in die vorbestimmte Richtung zu bewegen, wodurch das Erfassungswerkzeug (6B) in Kontakt mit dem leitfähigen Element (43) gebracht wird.

2. Die Schneidevorrichtung (10) gemäß Anspruch 1, wobei
das Bewegungselement (85) umfasst
einen zweiten Dränger (86), der die Schubstange (83) mit einer zweiten Druckkraft, die kleiner als die erste Druckkraft ist, in die zweite Richtung (K2) drängt, und
einen Drücker (87), der in der Lage ist, die Schubstange (83) in die zweite Richtung (K2) mit einer Druckkraft zu drücken, die größer ist als die erste Druckkraft, und
wobei mit der sich an der zweiten Position (P2) befindenden Schubstange (83) und dem vom ersten Ende (67A) des Spannfutters (67) gegriffenen Erfassungswerkzeug (6B), die Schubstange (83) in die zweite Richtung (K2) nur durch die zweite Druckkraft des zweiten Drängers (86) gedrückt wird.

3. Die Schneidevorrichtung (10) gemäß Anspruch 2, wobei
der Drücker (87) einen beweglichen Körper (88A) und einen Antriebsmotor (89) umfasst,
der bewegliche Körper (88A) mit einem Führungsloch (88H) versehen ist, das in der axialen Richtung (K) durch den beweglichen Körper (88A) verläuft,
ein Abschnitt der Schubstange (83) durch das Führungsloch (88H) hindurch angeordnet ist,
der bewegliche Körper (88A) beinhaltet
eine erste Fläche (88E), die sich neben dem zweiten Dränger (86) in der axialen Richtung (K) befindet, und
eine zweite Fläche (88F), die sich neben der Zugstange (68) in der axialen Richtung (K) befindet,
der bewegliche Körper (88A) in axialer Richtung (K) beweglich ist,
der Antriebsmotor (89) dazu konfiguriert ist, den beweglichen Körper (88A) in die erste Richtung (K1) und die zweite Richtung (K2) zu bewegen,
die Schubstange (83) beinhaltet
einen ersten Flansch (83A), der mit der ersten Fläche (88E) des beweglichen Körpers (88A) in Anlage kommen kann, und
einen zweiten Flansch (83B), der mit der zweiten Fläche (88F) des beweglichen Körpers (88A) in Anlage kommen kann,
der zweite Dränger (86) mit dem ersten Flansch (83A) verbunden ist,
wobei wenn sich die Schubstange (83) in der ersten Position (P1) befindet, der erste Flansch (83A) an der ersten Fläche (88E) anliegt und der zweite Flansch (83B) nicht an der zweiten Fläche (88F) anliegt,
wobei wenn sich die Schubstange (83) in der zweiten Position (P2) befindet, der erste Flansch (83A) nicht an der ersten Fläche (88E) anliegt und der zweite Flansch (83B) nicht an der zweiten Fläche anliegt (88F) und
wobei wenn sich die Schubstange (83) in der dritten Position (P3) befindet, der erste Flansch (83A) nicht an der ersten Fläche (88E) anliegt und der zweite Flansch (83B) an der zweiten Fläche (88F) anliegt.

4. Die Schneidevorrichtung (10) gemäß Anspruch 3, wobei
wenn sich der Drücker (87) an einer ersten Referenzposition (S1) befindet, verhindert der Drücker (87) eine Bewegung der Schubstange (83) in die zweite Richtung (K2), verursacht durch die zweite Druckkraft des zweiten Drückers (86), die die Schubstange (83) an die erste Position (P1) positioniert, und
beim Bewegen von der ersten Referenzposition (S1) zu einer zweiten Referenzposition (S2) weg von der ersten Referenzposition (S1) in der zweiten Richtung (K2) um eine vorbestimmte Distanz, ermöglicht der Drücker (87) die Bewegung der Schubstange (83) in die zweite Richtung (K2), verursacht durch die zweite Druckkraft des zweiten Drängers (86), die die Schubstange (83) an die zweite Position (P2) positioniert.

5. Die Schneidevorrichtung (10) gemäß Anspruch 4, wobei
beim Bewegen von der zweiten Referenzposition (S2) zu einer dritten Referenzposition (S3) weg von der zweiten Referenzposition (S2) in der zweiten Richtung (K2) um eine vorbestimmte Distanz drückt der Drücker (87) die Schubstange (83) in die zweite Richtung (K2), wobei der zweite Flansch (83B) an der zweiten Fläche (88F) anliegt, was zu einer Bewegung des Spannfutters (67) von der Greifstellung (M1) in die Freigabestellung (M2) führt.

6. Die Schneidevorrichtung (10) gemäß einem der Ansprüche 3 bis 5, wobei
der Aktuator (82) einen Sensor (90) umfasst, um einen Nichtkontakt der Schubstange (83) mit der Zugstange (68) beim Drücken durch den beweglichen Körper (88A) zu erkennen.

## Revendications

1. Appareil de découpage (10) comprenant :
une unité de broche (60) ;
un chariot (38) ;
un magasin d'outils (40) ;
un dispositif de retenue (50) ;
un élément conducteur (43) ;
un alimentateur de courant (45) ; et
un dispositif de commande (48), dans lequel
l'unité de broche (60) comprend une broche (62) et un actionneur (82),
la broche (62) comprend
un boîtier (63),
un palier (64A, 64B) logé dans le boîtier (63), le palier (64A, 64B) étant constitué d'un matériau céramique,
un arbre principal (65) supporté en rotation par le palier (64A, 64B), l'arbre principal (65) étant pourvu d'un trou traversant (65H) passant à travers l'arbre principal (65) dans une direction axiale (K) de l'arbre principal (65), l'arbre principal (65) comprenant une première extrémité (65A) et une deuxième extrémité (65B), la première extrémité (65A) de l'arbre principal (65) étant située sur un premier côté dans la direction axiale (K), la deuxième extrémité (65B) de l'arbre principal (65) étant située sur un second côté dans la direction axiale (K), un mandrin à pince (67) comprenant une première extrémité (67A) et une deuxième extrémité (67B), la première extrémité (67A) du mandrin à pince (67) étant celle située du même côté que la première extrémité (65A) de l'arbre principal (65), la première extrémité (67A) du mandrin à pince (67) étant configurée pour saisir l'un ou l'autre d'un outil d'usinage (6A) et d'un outil de détection (6B), la deuxième extrémité (67B) du mandrin à pince (67) étant celle située du même côté que la deuxième extrémité (65B) de l'arbre principal (65), le mandrin à pince (67) étant disposé dans le trou traversant (65H) et mobile dans la direction axiale (K),
une barre de traction (68) comprenant une première extrémité (68A) et une deuxième extrémité (68B), la première extrémité (68A) de la barre de traction (68) étant celle située du même côté que la première extrémité (65A) de l'arbre principal (65) et reliée à la deuxième extrémité (67B) du mandrin à pince (67), la deuxième extrémité (68B) de la barre de traction (68) étant celle située du même côté que la deuxième extrémité (65B) de l'arbre principal (65), la barre de traction (68) étant disposée dans le trou traversant (65H) et mobile dans la direction axiale (K), et
un premier poussoir (70) poussant la barre de traction (68) dans une première direction (K1) avec une première force de poussée, la première direction (K1) s'étendant de la première extrémité (65A) de l'arbre principal (65) à la deuxième extrémité (65B) de l'arbre principal (65),
l'actionneur (82) comprend
une tige de poussée (83) qui est capable de venir en contact avec la deuxième extrémité (68B) de la barre de traction (68) et de presser la barre de traction (68) dans une deuxième direction (K2) s'étendant de la deuxième extrémité (65B) de l'arbre principal (65) à la première extrémité (65A) de l'arbre principal (65), la tige de poussée (83) étant mobile dans la direction axiale (K), et
un moteur (85) pour déplacer la tige de poussée (83) dans la direction axiale (K),
le chariot (38) est configuré pour déplacer l'unité de broche (60) dans une direction prédéterminée, le magasin d'outils (40) est capable de contenir l'outil d'usinage (6A) et l'outil de détection (6B),
le dispositif de retenue (50) est mobile avec le magasin d'outils (40), le dispositif de retenue (50) étant configuré pour retenir une pièce (5) à usiner avec l'outil d'usinage (6A),
l'élément conducteur (43) est disposé sur le magasin d'outils (40) ou le dispositif de retenue (50) de telle sorte que l'élément conducteur (43) puisse venir en contact avec l'outil de détection (6B), l'élément conducteur (43) étant configuré pour détecter le contact de l'outil de détection (6B) avec l'élément conducteur (43) lorsqu'il est mis en conduction électrique avec la tige de poussée (83),
l'alimentateur de courant (45) est configuré pour fournir un courant à la tige de poussée (83),
le dispositif de commande (48) est configuré pour commander la broche (62), le dispositif de déplacement (85), le chariot (38) et l'alimentateur de courant (45),
le mandrin à pince (67) est mobile entre une position de préhension (M1) et une position de libération (M2) en fonction du mouvement de la barre de traction (68) dans la direction axiale (K), la position de préhension (M1) étant une position où la première extrémité (67A) du mandrin à pince (67) est fermée de manière à saisir l'un ou l'autre de l'outil d'usinage (6A) et de l'outil de détection (6B), la position de libération (M2) étant située à l'écart de la position de saisie (M1) dans la deuxième direction (K2) d'une distance prédéterminée, la position de libération (M2) étant une position où la première extrémité (67A) du mandrin à pince (67) est ouverte de manière à libérer l'outil d'usinage (6A) ou l'outil de détection (6B),
le dispositif de déplacement (85) est configuré pour déplacer la tige de poussée (83) entre une première position (P1), une deuxième position (P2) et une troisième position (P3), la première position (P1) étant une position dans laquelle la tige de poussée (83) n'est pas en contact avec la barre de traction (68), la deuxième position (P2) étant une position où la tige de poussée (83) est en contact avec la barre de traction (68) et la première extrémité (67A) du mandrin à pince (67) est fermée, la troisième position (P3) étant une position où la tige de poussée (83) est en contact avec la barre de traction (68) et la première extrémité (67A) du mandrin à pince (67) est ouverte, et
avec la tige de poussée (83) située dans la deuxième position (P2) et l'outil de détection (6B) saisi par la première extrémité (67A) du mandrin de serrage (67), le dispositif de commande (48) est configuré pour commander le dispositif d'alimentation en courant (45) de manière à fournir un courant à la tige de poussée (83) et à commander le chariot (38) de manière à déplacer l'unité de broche (60) dans la direction prédéterminée, amenant l'outil de détection (6B) en contact avec l'élément conducteur (43).

2. Appareil de découpage (10) selon la revendication 1, dans lequel
le dispositif de déplacement (85) inclut
un deuxième poussoir (86) poussant la tige de poussée (83) dans la deuxième direction (K2) avec une deuxième force de poussée inférieure à la première force de poussée, et
un presseur (87) qui est capable de presser la tige de poussée (83) dans la deuxième direction (K2) avec une force de pression supérieure à la première force de poussée, et
la tige de poussée (83) étant située dans la deuxième position (P2) et l'outil de détection (6B) étant saisi par la première extrémité (67A) du mandrin de serrage (67), la tige de poussée (83) est poussée dans la deuxième direction (K2) uniquement par la deuxième force de poussée du deuxième poussoir (86).

3. Appareil de découpage (10) selon la revendication 2, dans lequel
le presseur (87) comprend un corps mobile (88A) et un moteur d'entraînement (89),
le corps mobile (88A) est pourvu d'un trou de guidage (88H) traversant le corps mobile (88A) dans la direction axiale (K),
une partie de la tige de poussée (83) est disposée à travers le trou de guidage (88H), le corps mobile (88A) comprend
une première surface (88E) située de manière adjacente au second urger (86) dans la direction axiale (K), et
une deuxième surface (88F) située de manière adjacente à la barre de traction (68) dans la direction axiale (K),
le corps mobile (88A) est mobile dans la direction axiale (K),
le moteur d'entraînement (89) est configuré pour déplacer le corps mobile (88A) dans la première direction (K1) et la deuxième direction (K2),
la tige de poussée (83) comprend
une première bride (83A) qui est capable de venir en butée avec la première surface (88E) du corps mobile (88A), et
une deuxième bride (83B) qui est capable de venir en butée avec la deuxième surface (88F) du corps mobile (88A),
le deuxième urger (86) est relié à la première bride (83A),
la tige de poussée (83) étant située dans la première position (P1), la première bride (83A) est en butée contre la première surface (88E), et la deuxième bride (83B) est hors de butée contre la deuxième surface (88F),
la tige de poussée (83) étant située dans la deuxième position (P2), la première bride (83A) n'est pas en butée contre la première surface (88E), et la deuxième bride (83B) n'est pas en butée contre la deuxième surface (88F), et
la tige de poussée (83) étant située dans la troisième position (P3), la première bride (83A) n'est pas en butée contre la première surface (88E), et la deuxième bride (83B) est en butée contre la deuxième surface (88F).

4. Appareil de découpage (10) selon la revendication 3, dans lequel
le presseur (87) étant situé à une première position de référence (S1), le presseur (87) empêche le mouvement de la tige de poussée (83) dans la deuxième direction (K2) causé par la deuxième force de poussée du deuxième presseur (86), plaçant la tige de poussée (83) à la première position (P1), et
lors du déplacement de la première position de référence (S1) vers une deuxième position de référence (S2) éloignée de la première position de référence (S1) dans la deuxième direction (K2) d'une distance prédéterminée, le presseur (87) permet le déplacement de la tige de poussée (83) dans la deuxième direction (K2) provoqué par la deuxième force de poussée du deuxième presseur (86), plaçant la tige de poussée (83) à la deuxième position (P2).

5. Appareil de découpage (10) selon la revendication 4, dans lequel
lorsqu'il est déplacé de la deuxième position de référence (S2) à une troisième position de référence (S3) éloignée de la deuxième position de référence (S2) dans la deuxième direction (K2) d'une distance prédéterminée, le presseur (87) presse la tige de poussée (83) dans la deuxième direction (K2), avec la deuxième bride (83B) en butée contre la deuxième surface (88F), ce qui entraîne le déplacement du mandrin à pince (67) de la position de saisie (M1) à la position de libération (M2).

6. Appareil de découpage (10) selon l'une quelconque des revendications 3 à 5, dans lequel
l'actionneur (82) comprend un capteur (90) pour détecter le non-contact de la tige de poussée (83) avec la barre de traction (68) lorsqu'elle est pressée par le corps mobile (88A).
